(19) Europäisches Patentamt / European Patent Office / Office européen des brevets

(11) **EP 3 953 662 B1**

(12) **FASCICULE DE BREVET EUROPEEN**

(45) Date de publication et mention
de la délivrance du brevet:
**31.05.2023 Bulletin 2023/22**

(21) Numéro de dépôt: **20716500.2**

(22) Date de dépôt: **09.04.2020**

(51) Classification Internationale des Brevets (IPC):
*G01C 21/34* (2006.01)    *G06Q 10/04* (2023.01)
*G06N 3/04* (2023.01)    *G06N 3/08* (2023.01)
*G06N 5/02* (2023.01)

(52) Classification Coopérative des Brevets (CPC):
**G01C 21/343; G01C 21/3446; G06N 3/045;
G06N 3/047; G06N 3/08; G06Q 10/047;**
G06N 3/048; G06N 5/02

(86) Numéro de dépôt international:
**PCT/EP2020/060187**

(87) Numéro de publication internationale:
**WO 2020/208153 (15.10.2020 Gazette 2020/42)**

(54) **PROCEDE DE DEFINITION D'UN CHEMIN**

VERFAHREN ZUM DEFINIEREN EINES PFADES

METHOD FOR DEFINING A PATH

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.04.2019 FR 1903913**

(43) Date de publication de la demande:
**16.02.2022 Bulletin 2022/07**

(73) Titulaire: **Safran Electronics & Defense
75015 Paris (FR)**

(72) Inventeur: **OSANLOU, Kevin
75015 PARIS (FR)**

(74) Mandataire: **Cabinet Le Guen Maillet
3, impasse de la Vigie
CS 71840
35418 Saint-Malo Cedex (FR)**

(56) Documents cités:
• **Kevin Osanlou ET AL: "Constrained Shortest
Path Search with Graph Convolutional Neural
Networks", , 1 janvier 2018 (2018-01-01),
XP055672759, Extrait de l'Internet:
URL:http://www.lamsade.dauphine.fr/~cazena
ve/papers/pathcnn.pdf [extrait le 2020-03-02]**
• **OSANLOU KEVIN ET AL: "Optimal Solving of
Constrained Path-Planning Problems with Graph
Convolutional Networks and Optimized Tree
Search", 2019 IEEE/RSJ INTERNATIONAL
CONFERENCE ON INTELLIGENT ROBOTS AND
SYSTEMS (IROS), IEEE, 3 November 2019
(2019-11-03), pages 3519-3525, XP033695683,
DOI: 10.1109/IROS40897.2019.8968113 [retrieved
on 2020-01-23]**

**Description**

DOMAINE TECHNIQUE

L'invention concerne un procédé de définition d'un chemin à suivre par un véhicule dans un environnement représenté par un graphe de noeuds reliés par des arêtes, chaque noeud dudit graphe représentant une position pouvant être prise par ledit véhicule, chaque arête entre deux noeuds étant associée à un coût de transition entre les deux noeuds, un dispositif et un système mettant en oeuvre le procédé.

ETAT DE LA TECHNIQUE ANTERIEURE

Ces dernières années ont vu apparaître des véhicules dits autonomes, capables de se déplacer dans un environnement de manière autonome, c'est-à-dire sans intervention humaine ou de manière semi-autonome, c'est-à-dire avec une intervention humaine limitée. Ces véhicules autonomes regroupent des véhicules automobiles capables de circuler sur des routes en compagnie d'autres véhicules et des drones volants, roulants ou naviguant sous ou sur l'eau.
On demande en général à ces véhicules autonomes d'atteindre un point, appelé aussi noeud, d'arrivée à partir d'un point de départ sans lui préciser le chemin à suivre pour atteindre le point d'arrivée. Dans certains cas, le chemin peut être contraint, le véhicule autonome devant passer par une ou plusieurs positions obligatoires entre le point de départ et le point d'arrivée.
Généralement, le nombre de positions que peut adopter le véhicule autonome dans son environnement n'est pas infini, ce qui permet de représenter ledit environnement sous forme d'un graphe de noeuds reliés par des arêtes. Dans ce graphe, chaque arête reliant deux noeuds peut être associée à un poids représentatif d'un coût de transition entre les deux noeuds.

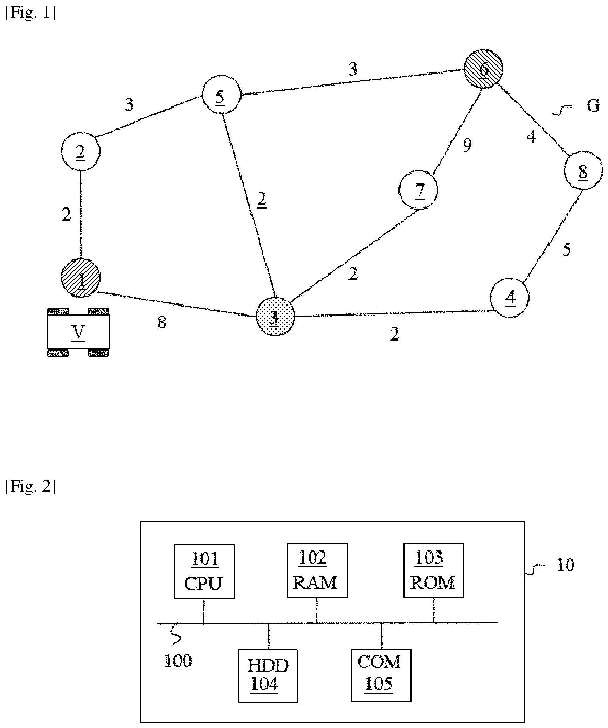

La Fig. 1 illustre un graphe G représentatif d'un environnement dans lequel peut évoluer un véhicule.
Le graphe G comprend « 8 » noeuds reliés par des arêtes. Chaque arête est associée à un poids. Par exemple, l'arête entre le noeud 1 et le noeud 2 est associée à un poids de valeur « 2 ». Dans un exemple, un véhicule V doit circuler dans le graphe G depuis un noeud 1 vers un noeud 6 en passant obligatoirement au moins une fois par un noeud 3. On appelle par la suite un triplet constitué d'un noeud de départ, d'un noeud d'arrivée et d'un ensemble de noeuds obligatoires, une instance du graphe G, notée I(S, D, M), S étant le noeud de départ, D étant le noeud d'arrivée et M étant l'ensemble des noeuds obligatoires. Par ailleurs, nous appelons résolution de l'instance I(S, D, M) une procédure permettant de rechercher un meilleur chemin dans un graphe G pour une instance I(S, D, M) dudit graphe. Une résolution d'instance consiste à rechercher le chemin minimisant un coût de transition global, le coût de transition global étant une somme de coûts de transition entre chaque paire de noeuds successifs composant ledit chemin. Dans l'exemple de la Fig. 1, l'instance à résoudre est donc 1 (noeud 1, noeud 6, f noeud 3}). La résolution de cette instance donne un ordre de parcours d'un ensemble de noeuds, du noeud 1 au noeud 6. L'ordre de parcours suivant est ainsi obtenu :
{nœud 1, noeud 2, noeud 5, noeud 3, noeud 5, noeud 6}.
Dans l'exemple de la Fig. 1, le graphe G comprend peu de noeuds. Pour un nombre de noeuds de cet ordre, la résolution d'une instance est relativement simple, même si cette instance comprend des noeuds obligatoires. Il est en effet possible de tester exhaustivement dans un temps raisonnable chaque combinaison possible des suites de noeuds pour trouver celle qui résout l'instance avec un coût minimal. Une telle méthode d'optimisation serait inapplicable pour des graphes comprenant un grand nombre de noeuds, *a fortiori* avec des instances à résoudre comprenant un grand nombre de noeuds obligatoires.
Des méthodes connues existent pour résoudre des instances dans un graphe comprenant un grand nombre de noeuds telles que les méthodes 2-opt, 3-opt, l'heuristique de Lin-Kemighan, etc. Ces méthodes ont toutefois des temps de résolution très importants, où, lorsque le temps de résolution est contraint, génèrent des solutions très sous-optimales.
La publication "Constrained Shortest Path Search with Graph Convolutional Neural Networks" par Kevin Osanlou et al. (2018) décrit l'utilisation d'un réseau de neurones convolutif de graphe (RNCG ou GCNN en anglais) pour la définition d'un chemin à suivre par un véhicule dans un environnement représenté par un graphe de noeuds reliés par des arêtes, chaque noeud dudit graphe représentant une position pouvant être prise par ledit véhicule, chaque arête entre deux noeuds étant associée à un coût de transition entre les deux noeuds. Le réseau de neurones prend une instance en entrée et donne en sortie une suggestion du prochain noeud à visiter depuis le sommet de départ. Cette information est utilisée dans un solveur global en programmation par contrainte pour accélérer le calcul du chemin optimal global. L'algorithme de programmation par contrainte global ne peut pas résoudre des instances complexes qui comportent beaucoup de points obligatoires.
Il est souhaitable de pallier ces inconvénients de l'état de la technique. Il est notamment souhaitable de proposer une méthode qui permette de résoudre une instance comprenant un ensemble de noeuds obligatoires important dans un graphe comprenant un grand nombre de noeuds de manière optimale ou quasi optimale dans un temps raisonnable.

EXPOSE DE L'INVENTION

Selon un premier aspect de la présente invention, la présente invention concerne un procédé de définition d'un chemin à suivre par un véhicule dans un environnement représenté par un graphe de noeuds reliés par des arêtes, chaque noeud dudit graphe représentant une position pouvant être prise par ledit véhicule, chaque arête entre deux noeuds étant associée à un coût de transition entre les deux noeuds. Le procédé comprend : obtenir une instance dudit graphe, dite instance à résoudre, chaque instance étant représentée par un noeud de départ, un noeud d'arrivée et un ensemble de noeuds obligatoires par lesquels le véhicule doit passer, lesdits noeuds de départ, d'arrivée et obligatoires formant les noeuds de l'instance à résoudre ; obtenir une information représentative d'un ordre initial de parcours desdits noeuds obligatoires en appliquant une procédure utilisant un réseau de neurones convolutif de graphe, dit RNCG, adapté audit graphe à ladite instance à résoudre; exécuter une procédure d'optimisation locale de l'ordre des noeuds obligatoires afin d'obtenir un ordre des noeuds obligatoires optimisé, ladite procédure étant initialisée avec ladite information représentative de l'ordre initial; définir un chemin pour ladite instance à résoudre à partir de l'ordre des noeuds obligatoires optimisé et pour chaque paire de noeuds de ladite instance à résoudre, d'un plus court chemin entre les noeuds de ladite paire.

Selon un mode de réalisation, la procédure utilisant le RNCG est une procédure itérative prenant une instance du graphe en entrée, dite instance d'entrée et générant une information représentative d'un ordre initial de parcours des noeuds obligatoires de l'instance d'entrée en sortie, dite information de sortie, et comprenant à chaque itération : appliquer le RNCG à ladite instance d'entrée afin d'obtenir pour chaque noeud du graphe une valeur représentative d'une probabilité d'être le prochain noeud obligatoire à traverser à la suite du noeud de départ de l'instance d'entrée ; identifier le noeud obligatoire de l'ensemble de noeuds obligatoires de l'instance d'entrée possédant la probabilité la plus élevée ; insérer le noeud obligatoire identifié dans une liste ordonnée de noeuds obligatoires; remplacer le noeud de départ de l'instance d'entrée par le noeud obligatoire identifié et retirer le noeud obligatoire identifié de l'ensemble de noeuds obligatoires de l'instance d'entrée ; les itérations prenant fin lorsqu'un nombre de noeuds dans l'ensemble de noeuds obligatoires de l'instance d'entrée est égal à un, le noeud obligatoire restant dans l'ensemble de noeuds obligatoires de l'instance d'entrée étant inséré dans ladite liste ordonnée et ladite liste ordonnée formant l'information de sortie.

Selon un mode de réalisation, la procédure d'optimisation locale de l'ordre des noeuds obligatoires est une procédure itérative prenant une instance, dite instance initiale, et une information représentative d'un ordre de noeuds obligatoires, dit ordre initial, en entrée et générant une information représentative d'un ordre de noeuds obligatoires optimisé en sortie, dit ordre optimisé, chaque information représentative d'un ordre de noeuds obligatoires étant une liste de noeuds obligatoires ordonnés, et comprend à chaque itération: déterminer une paire de noeuds obligatoires, dits noeuds pivots, parmi les noeuds obligatoires de la liste de noeuds obligatoires ordonnée de l'ordre initial, dite liste initiale, et obtenir une liste de noeuds obligatoires ordonnée modifiée, dite liste modifiée, dans laquelle les noeuds obligatoires de la liste initiale situés entre les deux noeuds pivots ont été intervertis symétriquement, la paire de noeuds pivots déterminée étant différente de toutes paires de noeuds pivots déjà utilisées pour modifier l'ordre des noeuds obligatoires dans la liste initiale ; définir une information représentative de l'ordre des noeuds obligatoires dans la liste modifiée comme étant un ordre optimisé temporaire lorsqu'un coût de transition global d'un chemin entre les noeuds de départ et d'arrivée de l'instance initiale en suivant l'ordre des noeuds obligatoires dans la liste modifiée est inférieur à un coût de transition global dudit chemin en suivant l'ordre des noeuds obligatoires dans la liste initiale; et définir l'ordre optimisé temporaire comme étant l'ordre initial ; mettre fin aux itérations de la procédure d'optimisation locale lorsqu'une condition d'arrêt est remplie, l'ordre optimisé étant le dernier ordre optimisé temporaire obtenu par la procédure d'optimisation locale.

Selon un mode de réalisation, le RNCG a été adapté audit graphe lors d'une phase préalable d'adaptation, la phase préalable d'adaptation comprenant une procédure d'apprentissage permettant d'adapter des paramètres d'une phase de convolution et d'une phase de combinaison linéaire dudit RNCG, dits paramètres du RNCG, la procédure d'apprentissage étant une procédure itérative comprenant à chaque itération : générer une instance aléatoire du graphe ; appliquer la procédure utilisant le RNCG à l'instance aléatoire afin d'obtenir une première information représentative d'un ordre des noeuds obligatoires de l'instance aléatoire, dite première information ; générer une deuxième information représentative d'un ordre des noeuds obligatoires de l'instance aléatoire définie aléatoirement, dite deuxième information ; obtenir une première et une deuxième informations représentatives d'un ordre des noeuds obligatoires optimisées, dites première et deuxième informations optimisées, en appliquant la procédure d'optimisation locale respectivement à l'ordre des noeuds obligatoires correspondant à la première et à la deuxième informations; sélectionner l'ordre représenté par ladite première ou par ladite deuxième information optimisée permettant de minimiser un coût de transition global d'un chemin entre les noeuds de départ et d'arrivée de l'instance aléatoire ; former une nouvelle instance à partir de chaque noeud obligatoire de l'instance aléatoire, chaque nouvelle instance ayant pour noeud de départ le noeud obligatoire correspondant à la nouvelle instance, pour noeud d'arrivée le noeud d'arrivée de l'instance aléatoire et pour un ensemble de noeuds obligatoires, les noeuds suivant le noeud obligatoire utilisé comme noeud de départ de la nouvelle instance dans l'ordre sélectionné ; et pour l'instance aléatoire et chaque nouvelle instance, former un couple en associant ladite instance à un prochain noeud obligatoire à traverser pour ladite instance, ledit prochain noeud obligatoire à traverser étant le noeud obligatoire suivant le noeud de départ de ladite instance dans l'ordre sélectionné ; mettre à jour une fenêtre d'apprentissage avec les couples ainsi formés; faire évoluer les paramètres du RNCG pour minimiser une erreur de prédiction par le RNCG d'un prochain noeud obligatoire à traverser en utilisant le prochain noeud obligatoire de couples de la fenêtre d'apprentissage comme référence de prochains noeuds obligatoires à traverser à obtenir par le RNCG.

Selon un deuxième aspect de l'invention, l'invention concerne un dispositif pour définir un chemin à suivre par un véhicule dans un environnement représenté par un graphe de noeuds reliés par des arêtes, chaque noeud dudit graphe représentant une position pouvant être prise par ledit véhicule, chaque arête entre deux noeuds étant associée à un coût de transition entre les deux noeuds. Le dispositif comprend : des moyens d'obtention pour obtenir une instance dudit graphe, dite instance à résoudre, chaque instance étant représentée par un noeud de départ, un noeud d'arrivée et un ensemble de noeuds obligatoires par lesquels le véhicule doit passer, lesdits noeuds de départ, d'arrivée et obligatoires formant les noeuds de l'instance à résoudre ; des moyens d'obtention pour obtenir une information représentative d'un ordre initial de parcours desdits noeuds obligatoires en appliquant une procédure utilisant un réseau de neurones convolutif de graphe, dit RNCG, adapté audit graphe à ladite instance à résoudre; des moyens d'exécution pour exécuter une procédure d'optimisation locale de l'ordre des noeuds obligatoires afin d'obtenir un ordre des noeuds obligatoires optimisé, ladite procédure étant initialisée avec ladite information représentative de l'ordre initial; des moyens de définition pour définir un chemin pour ladite instance à résoudre à partir de l'ordre des noeuds obligatoires optimisé et pour chaque paire de noeuds de ladite instance à résoudre, d'un plus court chemin entre les noeuds de ladite paire.

Selon un troisième aspect de l'invention, l'invention concerne un véhicule comprenant un dispositif selon le deuxième aspect.

Selon un quatrième aspect de l'invention, l'invention concerne un programme d'ordinateur, comprenant des instructions pour mettre en oeuvre, par un dispositif, le procédé selon le premier aspect, lorsque ledit programme est exécuté par un processeur dudit dispositif.

Selon un cinquième aspect de l'invention, l'invention concerne des moyens de stockage, caractérisés en ce qu'ils stockent un programme d'ordinateur comprenant des instructions pour exécuter, par un dispositif, le procédé selon le premier aspect, lorsque ledit programme est exécuté par un processeur dudit dispositif.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

[Fig. 1] illustre un graphe représentatif d'un environnement dans lequel peut évoluer un véhicule ;
[Fig. 2] illustre schématiquement une architecture matérielle d'un module de traitement apte à mettre en oeuvre l'invention ;
[Fig. 3] illustre schématiquement un procédé de définition d'un chemin d'un véhicule selon l'invention ;
[Fig. 4] illustre schématiquement une procédure d'application d'un réseau de neurones convolutif de graphe à une instance d'un graphe ;
[Fig. 5] illustre schématiquement une procédure d'apprentissage de paramètres d'un réseau de neurones convolutif de graphe ;
[Fig. 6] illustre schématiquement une procédure itérative de détermination d'un ordre de parcours de noeuds obligatoires pour une instance d'un graphe basée sur le réseau de neurones convolutif de graphe ; et,
[Fig. 7] illustre schématiquement une procédure d'optimisation locale d'un ordre des noeuds obligatoires.

EXPOSE DETAILLE DE MODES DE REALISATION

L'invention est décrite par la suite dans un contexte de véhicule autonome roulant circulant dans un environnement représenté par un graphe tel que le véhicule V dans le graphe G décrit en relation avec la Fig. 1, le graphe G n'étant pas orienté. Un graphe est dit orienté lorsqu'au moins un coût de transition entre deux noeuds du graphe dépend du sens de la transition entre les deux noeuds. L'invention est toutefois adaptée à d'autres types de véhicules autonomes ou semi-autonomes, tels qu'un drone volant ou naviguant sur ou sous l'eau, et évoluant dans un environnement pouvant être représenté par un graphe orienté ou pas.

Le procédé de définition d'un chemin à suivre par un véhicule dans son environnement se traduit par un procédé de résolution d'une instance d'un graphe. Comme décrit par la suite, ce procédé peut fonctionner en temps réel, ce procédé étant capable de résoudre une instance très rapidement et de fournir un chemin quasi-optimal au véhicule *V* en s'appuyant sur un réseau de neurones convolutif de graphe, dit *RNCG*. Le RNCG comprend des paramètres obtenus en utilisant une procédure d'apprentissage itérative pouvant être mise en oeuvre pendant une phase non temps réelle, préalablement à tout déplacement du véhicule V.

Dans un mode de réalisation, le véhicule V comprend un module de traitement 10 exécutant le procédé de définition d'un chemin selon l'invention. Dans ce mode de réalisation, le module de traitement 10 exécute aussi la procédure d'apprentissage itérative permettant de déterminer les paramètres du réseau de neurones.

Dans d'autres modes de réalisation, le module de traitement 10 est un module externe au véhicule V qui reçoit une instance à résoudre et communique au véhicule V un résultat du procédé de définition d'un chemin pour ladite instance, c'est-à-dire un chemin à suivre par le véhicule V.

La **Fig. 2** illustre schématiquement un exemple d'une architecture matérielle du module de traitement 10.

Selon l'exemple d'architecture matérielle représenté à la Fig. 2, le module de traitement 10 comprend alors, reliés par un bus de communication 100 : un processeur ou CPU (« Central Processing Unit » en anglais) 101 ; une mémoire vive RAM (« Random Access Memory » en anglais) 102 ; une mémoire morte ROM (« Read Only Memory » en anglais) 103 ; une unité de stockage telle qu'un disque dur ou un lecteur de support de stockage, tel qu'un lecteur de cartes SD (« Secure Digital » en anglais) 104 ; au moins une interface de communication 105 permettant par exemple au module de traitement 10 de communiquer des caractéristiques d'un chemin à suivre par le véhicule V à un module contrôlant les déplacements du véhicule V.

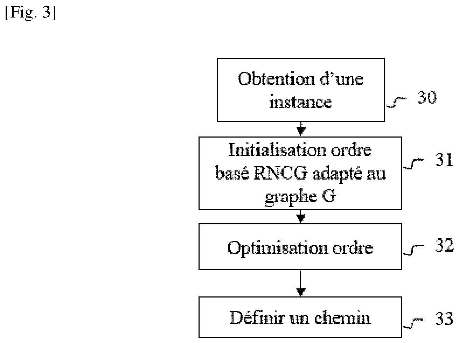

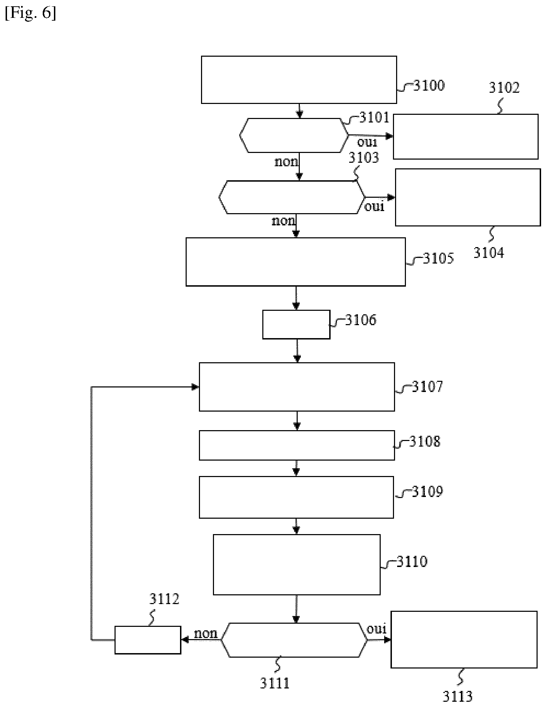

Le processeur 101 est capable d'exécuter des instructions chargées dans la RAM 102 à partir de la ROM 103, d'une mémoire externe (non représentée), d'un support de stockage (tel qu'une carte SD), ou d'un réseau de communication. Lorsque le module de traitement 10 est mis sous tension, le processeur 101 est capable de lire de la RAM 102 des instructions et de les exécuter. Ces instructions forment un programme d'ordinateur causant l'exécution complète ou partielle, par le processeur 101, du procédé décrit ci-après en relation avec la Fig. 3 et du procédé décrit en relation avec la Fig. 6.

Le procédé décrit en relation avec la Fig. 3 et le procédé décrit en relation avec la Fig. 6 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais). La **Fig. 3** illustre schématiquement un procédé de définition d'un chemin d'un véhicule selon l'invention.

Dans une étape 30, le module de traitement 10 obtient une instance à résoudre $I_R(S_R, D_R, M_R)$ d'un graphe G. L'instance $I_R(S_R, D_R, M_R)$ est donc représentée par un noeud de départ $S_R$, un noeud d'arrivée $D_R$ et un ensemble de noeuds obligatoires $M_R$. L'ensemble de noeuds obligatoires $M_R$ peut être vide ou comprendre un ou plusieurs noeuds obligatoires. Le noeud de départ $S_R$, le noeud d'arrivée $D_R$ et l'ensemble de noeuds obligatoires $M_R$ forment les *noeuds de l'instance $I_R(S_R, D_R, M_R)$*.

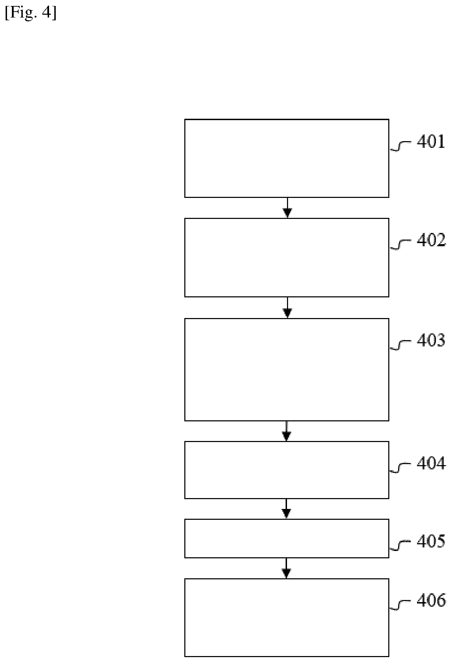

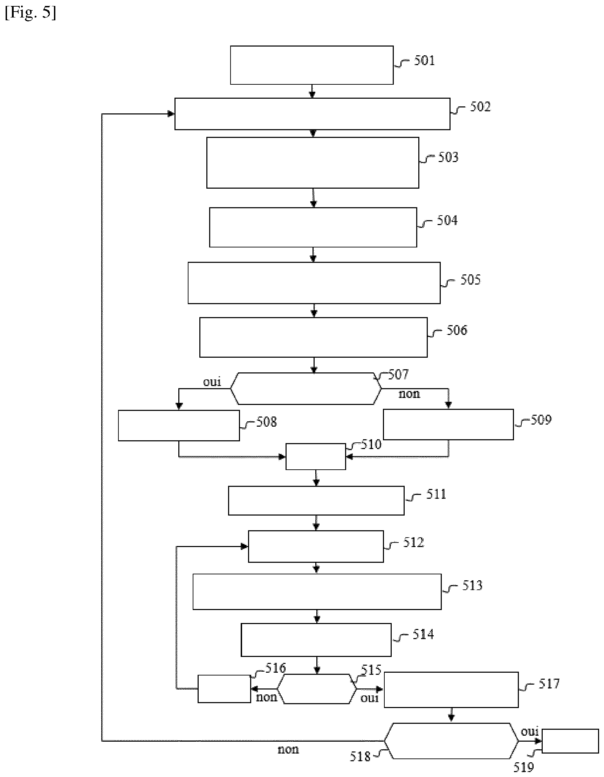

Dans une étape 31, le module de traitement 10 obtient une information représentative d'un ordre initial de parcours des noeuds obligatoires de l'ensemble de noeuds obligatoires $M_R$ entre le noeud de départ $S_R$ et le noeud d'arrivée $D_R$ en appliquant une procédure décrite en relation avec la Fig. 6 à l'instance $I_R(S_R, D_R, M_R)$. La procédure de la Fig. 6 utilise un RNCG adapté au graphe G. Une application dudit RNCG à une instance d'un graphe est décrite en relation avec la Fig. 4. L'adaptation du RNCG au graphe G passe par une phase préliminaire d'adaptation. Cette phase préliminaire d'adaptation s'appuie sur une procédure d'apprentissage itérative décrite en relation avec la Fig. 5 durant laquelle des paramètres du RNCG sont déterminés. L'information représentative d'un ordre initial de parcours des noeuds obligatoires de l'ensemble de noeuds obligatoires $M_R$ est une liste ordonnée de noeuds obligatoires.

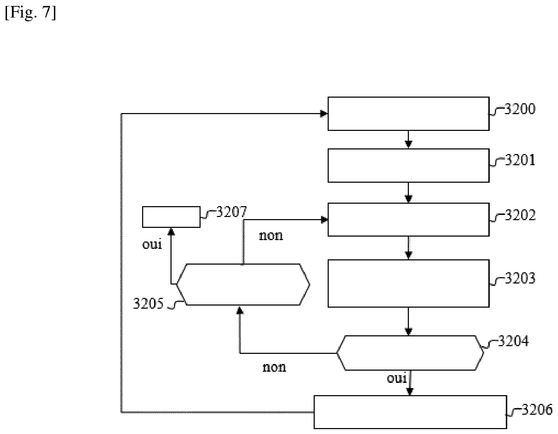

Dans une étape 32, le module de traitement 10 exécute une procédure d'optimisation locale de l'ordre des noeuds obligatoires afin d'obtenir un ordre des noeuds obligatoires optimisé, ladite procédure étant initialisée avec l'information représentative de l'ordre initial obtenue lors de l'étape 31. La procédure d'optimisation locale de l'ordre des noeuds obligatoires est décrite en relation avec la Fig. 7.

Dans une étape 33, le module de traitement 10 définit un chemin pour l'instance $I_R(S_R, D_R, M_R)$ à partir de l'ordre des noeuds obligatoires optimisé et, pour chaque paire de noeuds de l'instance $I_R(S_R, D_R, M_R)$, d'un plus court chemin entre les noeuds de ladite paire.

La **Fig. 4** illustre schématiquement une procédure d'application d'un RNCG à une instance *I(S, D, M)* du graphe G.

Dans une étape 401, le module de traitement 10 encode une instance *I(S, D, M)* du graphe G sous forme d'un vecteur $X_i$ à une dimension. Dans un mode de réalisation, lors de cet encodage, chaque noeud du graphe G est encodé suivant un nombre $NB_A$ = 3 d'attributs (A1, A2, A3) :

- A1=1 si le noeud est un noeud de départ pour l'instance *I(S, D, M)*, A1=0 sinon ;
- A2=1 si le noeud est un noeud d'arrivée pour l'instance *I(S, D, M)*, A2=0 sinon ;

- A3=1 si le noeud est un noeud obligatoire pour l'instance *I(S, D, M),* A3=0 sinon.

On suppose ici que les noeuds du graphe *G* sont ordonnés. A la fin de l'encodage, les noeuds du graphe *G* apparaissent dans le vecteur $X_i$ dans cet ordre sous forme de triplets d'attributs (A1, A2, A3).

Dans une étape 402, le module de traitement 10 met le vecteur $X_i$ sous forme d'une matrice $MAT_i$ ayant un nombre de lignes égal au nombre de noeuds $NB_G$ dans le graphe *G* et un nombre de colonnes égal au nombre $NB_A$ d'attributs utilisés. On passe donc d'un vecteur à une dimension ($X_i$) à un vecteur à deux dimensions ($MAT_i$).

Dans une étape 403, le module de traitement 10 applique le RNCG à la matrice $MAT_i$. Une application d'un réseau de neurones convolutif comprend en général une pluralité de phases dont les phases suivantes :

- Une phase de convolution ou plusieurs phases de convolution consécutives ;
- Une phase de vectorisation (mise sous forme de vecteur) des données de sortie de la ou des phases de convolution ;
- Une phase de combinaison linéaire, dite « fully connected ».

Chaque phase de convolution se décompose généralement en trois sous-phases :

- une sous-phase de convolution par un noyau de convolution de données d'entrée permettant d'obtenir un ensemble de caractéristiques représentatives desdites données d'entrées. Les caractéristiques obtenues ne sont pas prédéfinies mais apprises par le réseau de neurones lors d'une phase d'entraînement. Pendant la phase d'entraînement, le noyau de convolution évolue de manière à « apprendre » à extraire des caractéristiques pertinentes pour un problème donné.
- une sous-phase de « mise en commun » (« pooling » en terminologie anglo-saxonne) ayant pour but de réduire la taille des données qu'elle reçoit en entrée (issue de la convolution), tout en préservant les caractéristiques importantes de ces données d'entrées. La phase de « mise en commun » permet de réduire le nombre de calculs dans le réseau de neurones convolutif.
- une sous-phase d'application d'une fonction d'activation consistant à appliquer une fonction mathématique, dite *fonction d'activation,* aux données obtenues en sortie de chaque convolution (ou de la phase de mise en commun s'il y en a une). Le terme de *fonction d'activation* vient d'un équivalent biologique *potentiel d'activation,* qui représente un seuil de stimulation qui, une fois atteint, entraîne une réponse d'un neurone. Lorsqu'un réseau de neurones est utilisé dans une méthode de classification ou de prédiction de valeurs, la phase de combinaison linéaire constitue toujours la dernière phase d'un réseau de neurones, qu'il soit convolutif ou non. Cette phase reçoit un vecteur en entrée, dit *vecteur d'entrée,* et produit un nouveau vecteur en sortie, dit *vecteur de sortie.* Pour cela, elle applique une combinaison linéaire aux composantes du vecteur d'entrée. La phase de combinaison linéaire permet de classifier les données d'entrées du réseau de neurones suivant un nombre de classes prédéfinies *N.* Elle renvoie donc un vecteur de sortie de taille *N.* Chaque composante du vecteur de sortie est associée à une classe et est représentative d'une probabilité pour les données d'entrées du réseau de neurones d'appartenir à ladite classe. Chaque composante du vecteur d'entrée peut contribuer différemment au vecteur de sortie. Pour ce faire, lors de l'application de la combinaison linéaire, un poids différent est appliqué à chaque composante en fonction d'une importance qu'on souhaite donner à la caractéristique que cette composante représente. La combinaison linéaire de la phase de combinaison linéaire est généralement suivie d'une phase de transformation du vecteur de sortie en distribution de probabilité. Le réseau de neurones convolutif apprend les valeurs des poids de la phase de combinaison linéaire de la même manière qu'il apprend à faire évoluer le noyau de convolution de chaque phase de convolution.

Comme nous le décrivons par la suite, le RNCG utilisé dans l'invention applique une pluralité de phases de convolution à un graphe. Lesdites phases de convolution ne comprennent pas de sous-phase de « mise en commun » et comprennent une sous-phase d'application d'une fonction d'activation mise en oeuvre par la fonction ReLU() telle que ReLU(x)=max (0, x).

Dans un mode de réalisation, le noyau de convolution utilisé dans l'invention est tiré de l'article Thomas N Kipf and Max Welling. Semi-supervised classification with graph convolutional networks. ICLR 2017. Cet article propose une relation combinant convolution et application d'une fonction d'activation.

$$H^{(l+1)} = \sigma(\tilde{D}^{-\frac{1}{2}}\tilde{A}\tilde{D}^{-\frac{1}{2}} H^{(l)}W^{(l)})$$

$H^{(l+1)}$ représente des données de sortie issues d'une application d'une convolution par un noyau de convolution et d'une fonction d'activation à des données d'entrées $H^{(l)}$. $\tilde{A} = A + I,$ *A* étant une matrice d'adjacence du graphe *G* et *I* étant une

matrice d'identité. $\tilde{D}$ est une matrice de degrés de $\tilde{A}$ c'est-à-dire une matrice diagonale telle que $\tilde{D}_{ii} = \Sigma_j \tilde{A}_{ij}$. $W^{(l)}$ est une matrice de poids spécifique à une phase de convolution $l$. Ces poids évoluent pendant la phase d'entraînement de manière à apprendre au réseau de neurones à extraire des caractéristiques pertinentes de chaque instance du graphe $G$. La phase préliminaire d'adaptation au graphe $G$ utilisant la procédure d'apprentissage itérative décrite en relation avec la Fig. 5 a pour but de déterminer les poids (ou paramètres) de chaque matrice $W^{(l)}$. $\sigma$ est une fonction d'activation. Dans un mode de réalisation, la fonction d'activation $\sigma$ utilisée est la fonction ReLU() telle que ReLU(x)=max (0, x).

Dans un mode de réalisation, le RNCG appliqué lors de l'étape 403 est multicouches, c'est-à-dire qu'il comprend plusieurs phases de convolution. Par exemple, le RNCG utilise « 4 » phases de convolution.

Chaque phase de convolution du RNCG reçoit en entrée une matrice, dite matrice d'entrée, de $NBC\_IN$ colonnes et de $NBL\_IN$ lignes et génère en sortie une matrice, dite matrice de sortie, de $NBL\_OUT$ lignes et $NBC\_OUT$ colonnes. La matrice d'entrée $H^{(0)}$ de la première phase de convolution du RNCG est la matrice $MAT_i$. Lorsque deux phases de convolution de RNCG se suivent, la matrice de sortie de la première phase de convolution devient la matrice d'entrée de la phase de convolution suivante. Chaque composante d'une matrice de sortie est représentative de caractéristiques des composantes de la matrice d'entrée (et donc de la matrice $MAT_i$). Chaque matrice d'entrée (respectivement chaque matrice de sortie) comprend $NBL\_IN=NB_G$ lignes (respectivement $NBL\_OUT=NB_G$ lignes). Chaque matrice de sortie (et donc respectivement chaque matrice d'entrée à partir de la deuxième phase de convolution du RNCG) peut comprendre un nombre de colonnes $NBC\_OUT$ (respectivement $NBC\_IN$) fixe ou variable d'une phase de convolution à l'autre. Dans un mode de réalisation $NBC\_OUT$=10.

On considère ici que chaque phase de convolution classifie les données d'entrée en un nombre de classes égal au nombre de composantes de la matrice de sortie (c'est-à-dire en un nombre de classes égal à $NBL\_OUT \times NBC\_OUT$).

Dans une étape 404, le module de traitement 10 met la matrice de sortie issue de la dernière phase de convolution du RNCG sous forme d'un vecteur $Y_i$ de $NBL\_OUT \times NBC\_OUT$ composantes en mettant bout à bout chaque ligne de ladite matrice de sortie. Dans une étape 405, le module de traitement 10 applique une phase de combinaison linéaire (« fully connected » en terminologie anglo-saxonne) au vecteur $Y_i$. La phase de combinaison linéaire génère un vecteur $O_i$ de composantes $O_{ij}$ ($j$ allant de « 1 » à $NB_G$) à partir du vecteur $Y_i$. Chaque composante $O_{ij}$ est calculée de la manière suivante :

$$Q_{ij} = Y_i . W_{ij} + b_{ij}$$

où $W_{ij}$ est un poids d'un vecteur $W_i$ et $b_{ij}$ est un biais d'un vecteur de biais $b_i$ et $Y_i$. $W_{ij}$ est un produit scalaire. Chaque noeud du graphe G est associé à une composante du vecteur $O_i$, chaque composante étant un nombre réel représentatif d'une probabilité que le noeud correspondant soit le prochain noeud obligatoire de l'ensemble de noeuds obligatoires $M$ de l'instance $I(S, D, M)$ devant être traversé par le véhicule V après avoir quitté le noeud de départ S de l'instance $I(S, D, M)$.

Dans une étape 406, le module de traitement 10 transforme le vecteur $O_i$ en un vecteur de probabilité $P_i$. Pour ce faire, dans un mode de réalisation, une fonction exponentielle normalisée (« Softmax function » en terminologie anglo-saxonne) est appliquée à chaque composante du vecteur $O_i$. Une fonction exponentielle normalisée prend en entrée un vecteur z de K nombres réels $z_j$ et génère en sortie un vecteur $\Omega(z)$ de K nombres réels strictement positifs et de somme « 1 » tel que :

$$\Omega(z) = \frac{e^{z_j}}{\sum_{k=1}^{K} e^{z_k}}, \forall j \in \{1, \dots, K\}$$

En sortie du RNCG (i.e. en sortie de l'étape 406), le module de traitement 10 obtient pour chaque noeud du graphe G, une probabilité que ledit noeud soit le prochain noeud obligatoire de l'ensemble de noeuds obligatoires $M$ de l'instance $I(S, D, M)$ devant être traversé par le véhicule $V$ après avoir quitté le noeud de départ S de l'instance $I(S, D, M)$. Dans un mode de réalisation, l'instance $I(S, D, M)$ est encodée différemment, par exemple, avec un nombre $NB_A$ d'attributs différent, ou avec un nombre de lignes $NB_G$ différent, par exemple, en ne faisant apparaître que les noeuds de départ, d'arrivée et obligatoires dans le vecteur $X_i$.

Dans un mode de réalisation, le module de traitement 10 encode directement l'instance $I(S, D, M)$ sous forme de matrice $MAT_i$.

La **Fig. 5** illustre schématiquement une procédure d'apprentissage de paramètres d'un réseau de neurones convolutif de graphe.

Dans une étape 501, le module de traitement 10 génère une fenêtre d'apprentissage $F$. La fenêtre d'apprentissage *F* comprend des couples, la fenêtre pouvant comprendre un nombre de couples limité à un nombre prédéfini q. Chaque couple associe une instance à un prochain noeud obligatoire à visiter. Dans un mode de réalisation, la fenêtre d'apprentissage *F* est initialisée à l'ensemble vide et q=50000.

Dans une étape 502, le module de traitement 10 génère une instance aléatoire *I(S,D,M)*. Dans une étape 503, le module de traitement 10 applique le procédé décrit en relation avec la Fig. 6 à l'instance aléatoire *I(S,D,M)* afin d'obtenir une liste ordonnée $LO_{RNCG}$ de noeuds obligatoires à traverser par le véhicule *V* entre le noeud de départ *S* et le noeud d'arrivée *D*. La liste ordonnée $LO_{RNCC}$ est représentative d'un premier ordre de parcours des noeuds obligatoires. Le procédé décrit en relation avec la Fig. 6 fait intervenir le RNCG pour définir la liste ordonnée $LO_{RNCG}$.

L'étape 503 est suivie par une étape 504 au cours de laquelle le module de traitement 10 génère une liste ordonnée $LO_{RAND}$ pour l'instance aléatoire *I(S,D,M)* dans laquelle l'ordre des noeuds obligatoires de l'ensemble de noeuds obligatoires *M* est défini aléatoirement. La liste ordonnée $LO_{RAND}$ est représentative d'un deuxième ordre de parcours des noeuds obligatoires.

Dans une étape 505, le module de traitement 10 obtient une liste ordonnée optimisée $LO_{RNCG}^{opt}$ en partant de la liste ordonnée $LO_{RNCG}$. Pour ce faire, le module de traitement 10 utilise par exemple la procédure d'optimisation locale de l'ordre des noeuds obligatoires que nous décrivons par la suite en relation avec la Fig. 7. Lors de l'étape 505, le module de traitement 10 calcule un coût de transition global $C_{RNCG}^{opt}$ du chemin entre le noeud de départ et le noeud d'arrivée de l'instance aléatoire *I(S,D,M)* générée lors de l'étape 502. Le coût de transition global d'un chemin entre un noeud de départ et un noeud d'arrivée d'une instance d'un graphe dépend de l'ordre de parcours des noeuds obligatoires de cette instance. Le coût de transition global d'un chemin entre un noeud de départ et un noeud d'arrivée d'une instance d'un graphe est une somme de coûts de plus court chemin entre chaque paire de noeuds successifs de l'instance formant ledit chemin. Le calcul du coût de transition global $C_{RNCG}^{opt}$ du chemin s'appuie sur un tableau précalculé *TAB* comprenant pour chaque paire de noeuds du graphe *G,* un plus court chemin reliant les deux noeuds de ladite paire et un coût dudit plus court chemin. Chaque coût de plus court chemin est calculé en utilisant le coût de transition associé à chaque arête du graphe *G* utilisée pour former ledit plus court chemin. Le plus court chemin entre chaque paire de noeuds du graphe *G* a par exemple été déterminé en utilisant un algorithme de Dijkstra décrit dans le document Dijkstra, E. W., « A note on two problems in connexion with graphs », Numerische Mathematik, vol. 1, 1959, p. 269-271. La liste ordonnée $LO_{RNCG}^{opt}$ est représentative d'un premier ordre de parcours optimisé des noeuds obligatoires.

Dans une étape 506, le module de traitement 10 obtient une liste ordonnée optimisée $LO_{RAND}^{opt}$ en partant de la liste ordonnée aléatoire $LO_{RAND}$ obtenue à l'étape 504. Pour ce faire, le module de traitement 10 utilise par exemple la procédure d'optimisation locale de l'ordre des noeuds obligatoires que nous décrivons par la suite en relation avec la Fig. 7. Lors de l'étape 506, le module de traitement 10 calcule un coût de transition global $C_{RAND}^{opt}$ du chemin entre le noeud de départ et le noeud d'arrivée de l'instance aléatoire *I(S,D,M)* générée lors de l'étape 502. Comme lors de l'étape 505, le calcul du coût de transition global $C_{RAND}^{opt}$ du chemin s'appuie sur le tableau précalculé *TAB*. La liste ordonnée $LO_{RAND}^{opt}$ est représentative d'un deuxième ordre de parcours optimisé des noeuds obligatoires. Dans une étape 507, le module de traitement 10 compare le coût $C_{RNCG}^{opt}$ au coût $C_{RAND}^{opt}$. Si le coût $C_{RNCG}^{opt}$ est supérieur au coût $C_{RAND}^{opt}$, le module de traitement 10 sélectionne la liste ordonnée $LO_{RAND}^{opt}$ dans une étape 508. Sinon, le module de traitement 10 sélectionne la liste ordonnée $LO_{RNCG}^{opt}$ dans une étape 509. La liste ordonnée sélectionnée est alors notée $LO_{SELECT}^{opt}$.

Dans une étape 510, le module de traitement 10 initialise une variable j à l'unité.

Dans une étape 511, le module de traitement initialise une instance temporaire *i(s,d,m)* à la valeur de l'instance aléatoire *I(S,D,M)* générée lors de l'étape 502.

Dans une étape 512, le module de traitement 10 identifie le noeud obligatoire $m_j$ de l'ensemble de noeuds obligatoires m en position $j$ dans la liste ordonnée sélectionnée $LO_{SELECT}^{opt}$. Lors du premier passage par l'étape 512, la variable $j$ étant égale à « 1 », le module de traitement 10 choisit le noeud obligatoire $m_1$ situé en première position dans la liste ordonnée sélectionnée $LO_{SELECT}^{opt}$.

Dans une étape 513, le module de traitement 10 sauvegarde le couple formé par l'instance temporaire $i(s,d,m)$ et le noeud obligatoire $m_j$ en dernière position de la fenêtre d'apprentissage F. Si avant la sauvegarde dudit couple dans la fenêtre d'apprentissage F, la fenêtre contenait $q$ couples, le couple situé en première position de la fenêtre d'apprentissage F est supprimé de ladite fenêtre. Ainsi, la fenêtre d'apprentissage F comprend toujours un nombre $q$ de couples.

Dans une étape 514, le module de traitement 10 donne au noeud de départ $s$ de l'instance temporaire $i(s,d,m)$ la valeur $m_j$ et retire le noeud obligatoire $m_j$ de l'ensemble de noeuds obligatoires m.

Dans une étape 515, le module de traitement 10 détermine si l'ensemble de noeuds obligatoires m est vide.

Si l'ensemble de noeuds obligatoires m n'est pas vide, le module de traitement 10 incrémente la variable $j$ d'une unité dans une étape 516 et retourne à l'étape 512.

Si l'ensemble de noeuds obligatoires m est vide, le module de traitement 10 exécute une étape 517. Lors de l'étape 517, le module de traitement 10 lance une procédure d'entraînement itérative du RNCG. La procédure d'entraînement itérative comprend $K_{ITER}$ itérations. Dans un mode de réalisation, $K_{ITER}$=10000. A chaque itération, le module de traitement 10 sélectionne aléatoirement un nombre $B_c$ de couples associant une instance à un prochain noeud obligatoire à visiter dans la fenêtre d'apprentissage F. Dans un mode de réalisation, le nombre de couples $B_c$=32. Pour chaque couple sélectionné, le module de traitement 10 applique le RNCG à l'instance représentée dans le couple tel que décrit en relation avec la Fig. 4 en ajustant (*i.e.* en apprenant selon la terminologie des réseaux de neurones) des paramètres du RNCG afin que le noeud obligatoire du couple soit associé à la probabilité la plus élevée d'être le prochain noeud obligatoire à visiter. Les paramètres entraînés sont les poids de chaque matrice de poids $W^{(l)}$ utilisée dans le RNCG et les poids utilisés lors de la phase de combinaison linéaire de l'étape 405. Chaque itération de la procédure d'entraînement des paramètres du RNCG comprend une minimisation d'une fonction de coût $H(\theta)$ par descente stochastique de gradient, $\theta$ étant l'ensemble des paramètres du RNCG à apprendre.

$$H(\theta) = \frac{1}{B_c} \sum_{i=1}^{B_c} \sum_{j=1}^{NB_G} -t_{i,j}.\log\left(f(X_i, \theta)_j\right)$$

où $NB_G$ est le nombre de noeuds dans le graphe $G$, $t_{i,j}$ est une variable qui vaut « 1 » si pour l'instance numéro i, le prochain noeud obligatoire à visiter est le noeud du graphe G d'indice $j$, et « 0 » sinon. $X_i$ est le vecteur résultant d'un encodage de l'instance numéro $i$ tel que décrit en relation avec l'étape 401. L'instance numéro $i$ est une instance correspondant à un des $B_c$ couples sélectionnés aléatoirement dans la fenêtre d'apprentissage F, le prochain noeud obligatoire à visiter étant le noeud associé à l'instance numéro $i$ dans ledit couple. Les instances de la fenêtre d'apprentissage F sont des instances considérées comme résolues sur lesquelles la procédure d'apprentissage s'appuie pour apprendre les paramètres du réseau de neurones. La composante $\sum_{j=1}^{NB_G} -t_{i,j}.\log(f(X_i,\theta)_j)$ de la fonction de coût $H(\theta)$ représente une erreur de prédiction par le RNCG du prochain noeud obligatoire à traverser correspondant à l'instance numéro i. la fonction de coût $H(\theta)$ est donc une moyenne d'erreurs de prédiction par le RNCG de prochains noeuds à traverser pour un ensemble de $B_c$ instances. Lors de la première itération de la procédure d'apprentissage de paramètres du RNCG (et donc lors de la première itération de la procédure d'entraînement des paramètres du RNCG), le module de traitement 10 utilise des paramètres du RNCG déterminés aléatoirement pour le démarrage de la descente stochastique de gradient. Lors des itérations suivantes de la procédure d'apprentissage des paramètres du RNCG ou de la procédure d'entraînement des paramètres du RNCG, le module de traitement 10 initialise la descente stochastique de gradient avec les paramètres du RNCG déterminés lors de la dernière exécution de la procédure d'entraînement des paramètres du RNCG.

L'étape 517 est suivie d'une étape 518 au cours de laquelle le module de traitement 10 détermine si une condition d'arrêt de la procédure d'apprentissage des paramètres du RNCG est respectée. Dans une mode de réalisation, la condition d'arrêt est une durée maximum d'exécution de la procédure d'apprentissage de paramètres du RNCG. Si à l'étape 518 cette durée maximum est atteinte, la procédure d'apprentissage des paramètres du RNCG s'arrête lors d'une étape 519. Sinon, le module de traitement 10 retourne à l'étape 502. Dans un mode de réalisation, la durée maximum est égale à « 24 » heures.

A la fin de la procédure d'apprentissage de paramètres du RNCG, le RNCG est considéré comme entraîné.

La **Fig. 6** illustre schématiquement une procédure itérative de détermination d'un ordre de parcours de noeuds obligatoires pour une instance d'un graphe basée sur le RNCG décrit en relation avec la Fig. 4. Le procédé de la Fig. 6 est utilisé dans la procédure d'apprentissage décrite en relation avec la Fig. 5, mais aussi, une fois l'apprentissage effectué, pour déterminer un ordre des noeuds obligatoires pour une instance lors de l'étape 31.

Dans une étape 3100, le module de traitement 10 obtient une instance courante à résoudre $I_c(S_c, D_c, M_c)$. Lors de l'étape 503, l'instance courante $I_c(S_c, D_c, M_c) = I(S, D, M)$. Lors de l'étape 31, l'instance courante $I_c(S_c, D_c, M_c) = I_R(S_R, D_R, M_R)$.

Dans une étape 3101, le module de traitement 10 détermine si l'ensemble de noeuds obligatoires $M_c$ est vide. Si c'est le cas, l'étape 3101 est suivie d'une étape 3102 au cours de laquelle le module de traitement 10 génère une liste ordonnée $LO_{RNCG}$ vide et met fin à l'étape 503.

Si l'ensemble de noeuds obligatoires $M_c$ n'est pas vide, le module de traitement 10 détermine lors d'une étape 3103, si l'ensemble de noeuds obligatoires $M_c$ contient un noeud obligatoire (*i.e.* si le cardinal de l'ensemble de noeuds obligatoires $M_c$ est égal à « 1 »). Si l'ensemble de noeuds obligatoires $M_c$ ne contient qu'un noeud obligatoire, le module de traitement 10 génère une liste ordonnée $LO_{RNCG}$ contenant uniquement ce noeud obligatoire et met fin à l'étape 503.

Si l'ensemble de noeuds obligatoires $M_c$ contient une pluralité de noeuds obligatoires, le module de traitement 10 initialise une instance temporaire $i_c(s_c, d_c, m_c)$ à la valeur de l'instance courante $I_c(S_c, D_c, M_c)$ lors d'une étape 3105.

Dans une étape 3106, le module de traitement 10 initialise une variable $j$ à l'unité.

Dans une étape 3107, le module de traitement 10 applique le RNCG décrit en Fig. 4 à l'instance temporaire $i_c(s_c, d_c, m_c)$. L'application du RNCG à l'instance temporaire $i_c(s_c, d_c, m_c)$ permet d'obtenir un vecteur de probabilité associant à chaque noeud du graphe $G$ une valeur de probabilité.

Dans une étape 3108, le module de traitement 10 détermine le noeud obligatoire $m_{cj}$ de l'ensemble de noeuds obligatoires $m_c$ ayant la probabilité la plus élevée d'être le prochain noeud obligatoire à traverser à la suite du noeud de départ $s_c$. Le module de traitement 10 insère alors le noeud obligatoire $m_{cj}$ dans la liste ordonnée $LO_{RNCG}$ des noeuds obligatoires dans une étape 3109.

Dans une étape 3110, le module de traitement 10 donne au noeud de départ $s_c$ de l'instance temporaire $i_c(s_c, d_c, m_c)$ la valeur du noeud obligatoire $m_{cj}$ et retire le noeud obligatoire $m_{cj}$ de l'ensemble de noeuds obligatoires $m_c$.

Dans une étape 3111, le module de traitement 10 détermine si le nombre de noeuds obligatoires restant dans l'ensemble de noeuds obligatoires $m_c$ est égal à l'unité. Si c'est le cas, le module de traitement 10 ajoute le noeud obligatoire restant à la fin de la liste ordonnée $LO_{RNCG}$ dans une étape 3113. A cette étape, tous les noeuds obligatoires de l'instance $I_c(S_c, D_c, M_c)$ apparaissent dans la liste ordonnée $LO_{RNCC}$ dans l'ordre proposé par le RNCG. La liste ordonnée $LO_{RNCG}$ est alors une information représentative d'un ordre de parcours de noeuds obligatoires de l'ensemble de noeuds obligatoires $M_c$ de l'instance $I_c(S_c, D_c, M_c)$.

Si le nombre de noeuds obligatoires restant dans l'ensemble de noeuds obligatoires $m_c$ est supérieur à l'unité, le module de traitement 10, incrémente la variable j d'une unité lors d'une étape 3112 et retourne à l'étape 3107. Le module de traitement 10 repart donc avec une nouvelle instance ayant pour noeud de départ $s_c$ le noeud obligatoire $m_{cj}$ déterminé lors de l'itération précédente, pour noeud d'arrivée, le même noeud $d_c$ que dans l'itération précédente et une liste de noeuds obligatoires $m_c$ identique à la précédente de laquelle a été supprimée $m_{cj}$.

La **Fig. 7** illustre schématiquement un exemple de procédure d'optimisation locale de l'ordre des noeuds obligatoires. La procédure de la Fig. 7 est donc une procédure d'optimisation locale. L'initialisation de cette procédure par un ordre de parcours de noeuds obligatoires obtenu par un réseau de neurones adapté au graphe $G$, permet d'obtenir quasiment systématiquement un ordre de parcours des noeuds obligatoires meilleur qu'en initialisant ladite procédure avec un ordre de parcours de noeuds obligatoires définis aléatoirement.

La procédure d'optimisation locale de l'ordre des noeuds obligatoires est utilisée lors des étapes 505, 506 et 32. Cette procédure reçoit en entrée une instance $I^{opt}(S^{opt}, D^{opt}, M^{opt})$ et une liste ordonnée à optimiser $LO^{opt}$.

Dans une étape 3200, le module de traitement 10 crée une liste ordonnée variable $lo^{opt}$. Dans une étape 3201, le module de traitement 10 calcule un coût de transition global $C^{opt}$ du chemin entre le noeud de départ $S^{opt}$ et le noeud d'arrivée $D^{opt}$ de l'instance aléatoire $I^{opt}(S^{opt}, D^{opt}, M^{opt})$ en prenant en compte l'ordre des noeuds obligatoires de la liste ordonnée $LO^{opt}$. Le calcul du coût de transition global $C^{opt}$ du chemin s'appuie sur le tableau précalculé $TAB$.

Dans une étape 3202, le module de traitement 10 change l'ordre dans la liste ordonnée $LO^{opt}$ et sauvegarde la liste ordonnée obtenue dans la liste ordonnée variable $lo^{opt}$. Lors de l'étape 3202, le module de traitement 10 détermine une paire d'éléments, dits éléments pivots, dans la liste ordonnée $LO^{opt}$ et intervertit les éléments de la liste ordonnée $LO^{opt}$ situés entre les deux éléments pivots de manière symétrique. La paire d'éléments pivots déterminée est différente de toutes paires d'éléments pivots déjà utilisées pour la liste ordonnée $LO^{opt}$. A partir de la liste ordonnée $LO^{opt}$ on obtient alors une liste ordonnée variable $lo^{opt}$ dans laquelle les éléments de la liste ordonnée $LO^{opt}$ situés entre les deux éléments pivots ont été intervertis symétriquement.

Dans une étape 3203, le module de traitement 10 calcule un coût de transition global $c^{opt}$ du chemin entre le noeud de départ $S^{opt}$ et le noeud d'arrivée $D^{opt}$ de l'instance aléatoire $I^{opt}(S^{opt}, D^{opt}, M^{opt})$ en prenant en compte l'ordre des noeuds obligatoires de la liste ordonnée variable $lo^{opt}$ obtenue lors de l'étape 3202.

Dans une étape 3204, le module de traitement 10 compare le coût de transition global $c^{opt}$ au coût de transition global $C^{opt}$. Si $c^{opt} < C^{opt}$, lors d'une étape 3206, le module de traitement 10 modifie la liste ordonnée $LO^{opt}$ de la manière suivante :

$$LO^{opt} = lo^{opt}$$

On obtient alors une nouvelle liste ordonnée $LO^{opt}$ pour laquelle aucune paire d'éléments pivots n'a été testée. L'étape 3206 est alors suivie de l'étape 3200.

Sinon, le module de traitement 10 vérifie lors d'une étape 3205 si toutes les paires d'éléments pivots possibles de la liste ordonnée $LO^{opt}$ ont été testées. Si toutes les paires d'éléments pivots possibles de la liste ordonnée $LO^{opt}$ ont été testées, le module de traitement 10 met fin à la procédure itérative d'optimisation d'un ordre de noeuds obligatoires lors d'une étape 3207. Sinon, le module de traitement 10 revient à l'étape 3202.

Dans un mode de réalisation, lors de l'étape 3205, le module de traitement 10, en plus de tester si toutes les paires d'éléments pivots possibles de la liste ordonnée $LO^{opt}$ ont été testées, teste une condition d'arrêt. La condition d'arrêt est ici une durée prédéterminée d'exécution de la procédure itérative d'optimisation d'un ordre de noeuds obligatoires. Dans un mode de réalisation, cette durée prédéterminée est égale à « 60 » secondes. La procédure d'optimisation d'un ordre de noeuds obligatoires s'arrête lorsque la durée prédéterminée est atteinte. A la fin de cette procédure, la dernière liste ordonnée $LO^{opt}$ obtenue est la liste ordonnée optimisée.

## Revendications

1. Procédé de définition d'un chemin à suivre par un véhicule dans un environnement représenté par un graphe de noeuds reliés par des arêtes, chaque noeud dudit graphe représentant une position pouvant être prise par ledit véhicule, chaque arête entre deux noeuds étant associée à un coût de transition entre les deux noeuds, le procédé comprenant

   - obtenir (30) une instance dudit graphe, dite instance à résoudre, chaque instance étant représentée par un noeud de départ, un noeud d'arrivée et un ensemble de noeuds obligatoires par lesquels le véhicule doit passer, lesdits noeuds de départ, d'arrivée et obligatoires formant les noeuds de l'instance à résoudre ;
   - obtenir (31) une information représentative d'un ordre initial de parcours desdits noeuds obligatoires en appliquant une procédure utilisant un réseau de neurones convolutif de graphe, dit RNCG, adapté audit graphe à ladite instance à résoudre ;
   - exécuter (32) une procédure d'optimisation locale de l'ordre des noeuds obligatoires afin d'obtenir un ordre des noeuds obligatoires optimisé, ladite procédure étant initialisée avec ladite information représentative de l'ordre initial ;
   - définir (33) un chemin pour ladite instance à résoudre à partir de l'ordre des noeuds obligatoires optimisé et pour chaque paire de noeuds de ladite instance à résoudre, d'un plus court chemin entre les noeuds de ladite paire.

2. Procédé selon la revendication 1, **caractérisé en ce que** la procédure utilisant le RNCG est une procédure itérative prenant une instance du graphe en entrée, dite instance d'entrée et générant une information représentative d'un ordre initial de parcours des noeuds obligatoires de l'instance d'entrée en sortie, dite information de sortie, et comprenant à chaque itération:

   - appliquer (3107) le RNCG à ladite instance d'entrée afin d'obtenir pour chaque noeud du graphe une valeur représentative d'une probabilité d'être le prochain noeud obligatoire à traverser à la suite du noeud de départ de l'instance d'entrée ;
   - identifier (3108) le noeud obligatoire de l'ensemble de noeuds obligatoires de l'instance d'entrée possédant la probabilité la plus élevée ;
   - insérer (3109) le noeud obligatoire identifié dans une liste ordonnée de noeuds obligatoires ;
   - remplacer (3110) le noeud de départ de l'instance d'entrée par le noeud obligatoire identifié et retirer le noeud obligatoire identifié de l'ensemble de noeuds obligatoires de l'instance d'entrée ;
   - les itérations prenant fin lorsqu'un nombre de noeuds dans l'ensemble de noeuds obligatoires de l'instance d'entrée est égal à un, le noeud obligatoire restant dans l'ensemble de noeuds obligatoires de l'instance d'entrée étant inséré dans ladite liste ordonnée et ladite liste ordonnée formant l'information de sortie.

**3.** Procédé selon la revendication 1 ou 2, **caractérisé en ce que** la procédure d'optimisation locale de l'ordre des noeuds obligatoires est une procédure itérative prenant une instance, dite instance initiale, et une information représentative d'un ordre de noeuds obligatoires, dit ordre initial, en entrée et générant une information représentative d'un ordre de noeuds obligatoires optimisé en sortie, dit ordre optimisé,

- chaque information représentative d'un ordre de noeuds obligatoires étant une liste de noeuds obligatoires ordonnés, et comprend à chaque itération :
- déterminer (3202) une paire de noeuds obligatoires, dits noeuds pivots, parmi les noeuds obligatoires de la liste de noeuds obligatoires ordonnée de l'ordre initial, dite liste initiale, et obtenir une liste de noeuds obligatoires ordonnée modifiée, dite liste modifiée, dans laquelle les noeuds obligatoires de la liste initiale situés entre les deux noeuds pivots ont été intervertis symétriquement, la paire de noeuds pivots déterminée étant différente de toutes paires de noeuds pivots déjà utilisées pour modifier l'ordre des noeuds obligatoires dans la liste initiale ;
- définir (3204) une information représentative de l'ordre des noeuds obligatoires dans la liste modifiée comme étant un ordre optimisé temporaire lorsqu'un coût de transition global (3203) d'un chemin entre les noeuds de départ et d'arrivée de l'instance initiale en suivant l'ordre des noeuds obligatoires dans la liste modifiée est inférieur à un coût de transition global dudit chemin en suivant l'ordre des noeuds obligatoires dans la liste initiale; et définir (3206) l'ordre optimisé temporaire comme étant l'ordre initial ; et,
- mettre fin (3207) aux itérations de la procédure d'optimisation locale lorsqu'une condition d'arrêt est remplie (3205), l'ordre optimisé étant le dernier ordre optimisé temporaire obtenu par la procédure d'optimisation locale.

**4.** Procédé selon la revendication 1, 2 ou 3, **caractérisé en ce que** le RNCG a été adapté audit graphe lors d'une phase préalable d'adaptation, la phase préalable d'adaptation comprenant une procédure d'apprentissage permettant d'adapter des paramètres d'une phase de convolution et d'une phase de combinaison linéaire dudit RNCG, dits paramètres du RNCG, la procédure d'apprentissage étant une procédure itérative comprenant à chaque itération :

- générer (502) une instance aléatoire du graphe ;
- appliquer (503) la procédure utilisant le RNCG à l'instance aléatoire afin d'obtenir une première information représentative d'un ordre des noeuds obligatoires de l'instance aléatoire, dite première information ;
- générer (504) une deuxième information représentative d'un ordre des noeuds obligatoires de l'instance aléatoire défini aléatoirement, dite deuxième information ;
- obtenir une première et une deuxième informations représentatives d'un ordre des noeuds obligatoires optimisées, dites première et deuxième informations optimisées, en appliquant la procédure d'optimisation locale respectivement à l'ordre des noeuds obligatoires correspondant à la première et à la deuxième informations ;
- sélectionner (507, 508, 509) l'ordre représenté par ladite première ou par ladite deuxième information optimisée permettant de minimiser un coût de transition global d'un chemin entre les noeuds de départ et d'arrivée de l'instance aléatoire ;
- former une nouvelle instance à partir de chaque noeud obligatoire de l'instance aléatoire, chaque nouvelle instance ayant pour noeud de départ le noeud obligatoire correspondant à la nouvelle instance, pour noeud d'arrivée le noeud d'arrivée de l'instance aléatoire et pour ensemble de noeuds obligatoires, les noeuds suivant le noeud obligatoire utilisé comme noeud de départ de la nouvelle instance dans l'ordre sélectionné ; et pour l'instance aléatoire et chaque nouvelle instance, former un couple en associant ladite instance à un prochain noeud obligatoire à traverser pour ladite instance, ledit prochain noeud obligatoire à traverser étant le noeud obligatoire suivant le noeud de départ de ladite instance dans l'ordre sélectionné ;
- mettre à jour une fenêtre d'apprentissage avec les couples ainsi formés ;
- faire évoluer les paramètres du RNCG pour minimiser une erreur de prédiction par le RNCG d'un prochain noeud obligatoire à traverser en utilisant le prochain noeud obligatoire de couples de la fenêtre d'apprentissage comme référence de prochains noeuds obligatoires à traverser à obtenir par le RNCG.

**5.** Dispositif pour définir un chemin à suivre par un véhicule dans un environnement représenté par un graphe de noeuds reliés par des arêtes, chaque noeud dudit graphe représentant une position pouvant être prise par ledit véhicule, chaque arête entre deux noeuds étant associée à un coût de transition entre les deux noeuds, le dispositif comprenant:

- des moyens d'obtention pour obtenir (30) une instance dudit graphe, dite instance à résoudre, chaque instance étant représentée par un noeud de départ, un noeud d'arrivée et un ensemble de noeuds obligatoires par lesquels le véhicule doit passer, lesdits noeuds de départ, d'arrivée et obligatoires formant les noeuds de l'instance à résoudre ;

- des moyens d'obtention pour obtenir (31) une information représentative d'un ordre initial de parcours desdits noeuds obligatoires en appliquant une procédure utilisant un réseau de neurones convolutif de graphe, dit RNCG, adapté audit graphe à ladite instance à résoudre ;
- des moyens d'exécution pour exécuter (32) une procédure d'optimisation locale de l'ordre des noeuds obligatoires afin d'obtenir un ordre des noeuds obligatoires optimisé, ladite procédure étant initialisée avec ladite information représentative de l'ordre initial ;
- des moyens de définition pour définir (33) un chemin pour ladite instance à résoudre à partir de l'ordre des noeuds obligatoires optimisé et pour chaque paire de noeuds de ladite instance à résoudre, d'un plus court chemin entre les noeuds de ladite paire.

6. Dispositif selon la revendication 5, dans lequel ladite procédure d'optimisation locale de l'ordre des noeuds obligatoires est une procédure itérative prenant une instance, dite instance initiale, et une information représentative d'un ordre de noeuds obligatoires, dit ordre initial, en entrée et générant une information représentative d'un ordre de noeuds obligatoires optimisé en sortie, dit ordre optimisé,

- chaque information représentative d'un ordre de noeuds obligatoires étant une liste de noeuds obligatoires ordonnés, et comprend à chaque itération :
- déterminer une paire de noeuds obligatoires, dits noeuds pivots, parmi les noeuds obligatoires de la liste de noeuds obligatoires ordonnée de l'ordre initial, dite liste initiale, et obtenir une liste de noeuds obligatoires ordonnée modifiée, dite liste modifiée, dans laquelle les noeuds obligatoires de la liste initiale situés entre les deux noeuds pivots ont été intervertis symétriquement, la paire de noeuds pivots déterminée étant différente de toutes paires de noeuds pivots déjà utilisées pour modifier l'ordre des noeuds obligatoires dans la liste initiale ;
- définir une information représentative de l'ordre des noeuds obligatoires dans la liste modifiée comme étant un ordre optimisé temporaire lorsqu'un coût de transition global d'un chemin entre les noeuds de départ et d'arrivée de l'instance initiale en suivant l'ordre des noeuds obligatoires dans la liste modifiée est inférieur à un coût de transition global dudit chemin en suivant l'ordre des noeuds obligatoires dans la liste initiale; et définir l'ordre optimisé temporaire comme étant l'ordre initial ; et,
- mettre fin aux itérations de la procédure d'optimisation locale lorsqu'une condition d'arrêt est remplie, l'ordre optimisé étant le dernier ordre optimisé temporaire obtenu par la procédure d'optimisation locale.

7. Véhicule comprenant un dispositif selon la revendication 5.

8. Programme d'ordinateur, **caractérisé en ce qu'**il comprend des instructions pour mettre en oeuvre, par un dispositif selon l'une quelconque des revendications 5 et 6, le procédé selon l'une quelconque des revendications 1 à 4, lorsque ledit programme est exécuté par un processeur dudit dispositif.

9. Moyens de stockage, **caractérisés en ce qu'**ils stockent un programme d'ordinateur comprenant des instructions pour exécuter, par un dispositif selon l'une quelconque des revendications 5 et 6, le procédé selon l'une quelconque des revendications 1 à 4, lorsque ledit programme est exécuté par un processeur dudit dispositif.

**Patentansprüche**

1. Verfahren zur Definition eines von einem Fahrzeug in einer Umgebung zu verfolgenden Wegs, die von einem Graphen von durch Kanten verbundenen Knoten dargestellt wird, wobei jeder Knoten des Graphen eine Position darstellt, die von dem Fahrzeug eingenommen werden kann, wobei jede Kante zwischen zwei Knoten Übergangskosten zwischen den zwei Knoten zugeordnet ist, wobei das Verfahren enthält:

- den Erhalt (30) einer Instanz des Graphen, zu lösende Instanz genannt, wobei jede Instanz von einem Abfahrtsknoten, einem Ankunftsknoten und einer Einheit von obligatorischen Knoten dargestellt wird, die das Fahrzeug durchfahren muss, wobei die Abfahrts-, Ankunfts- und obligatorischen Knoten die Knoten der zu lösenden Instanz bilden;
- den Erhalt (31) einer für eine Anfangsdurchfahrreihenfolge der obligatorischen Knoten repräsentativen Information, indem eine Prozedur angewendet wird, die ein gefaltetes neuronales Graphennetzwerk, RNCG genannt, verwendet, das an den Graphen bei der zu lösenden Instanz angepasst ist;
- die Ausführung (32) einer lokalen Optimierungsprozedur der Reihenfolge der obligatorischen Knoten, um eine optimierte Reihenfolge der obligatorischen Knoten zu erhalten, wobei die Prozedur mit der für die Anfangsreihenfolge repräsentativen Information initialisiert wird;

- die Definition (33) eines Wegs für die zu lösende Instanz ausgehend von der optimierten Reihenfolge der obligatorischen Knoten und für jedes Paar von Knoten der zu lösenden Instanz von einem kürzeren Weg zwischen den Knoten des Paars.

2. Verfahren nach Anspruch 1, **dadurch gekennzeichnet, dass** die das RNCG verwendende Prozedur eine iterative Prozedur ist, die eine Instanz des Graphen am Eingang, Eingangsinstanz genannt, nimmt und eine für eine Anfangsdurchfahrreihenfolge der obligatorischen Knoten der Eingangsinstanz am Ausgang repräsentative Information, Ausgangsinformation genannt, generiert und bei jeder Iteration enthält:

  - die Anwendung (3107) des RNCG an die Eingangsinstanz, um für jeden Knoten des Graphen einen Wert zu erhalten, der für eine Wahrscheinlichkeit repräsentativ ist, der nächste obligatorische Knoten zu sein, der nach dem Abfahrtsknoten der Eingangsinstanz zu durchqueren ist;
  - die Identifikation (3108) des obligatorischen Knotens der Einheit von obligatorischen Knoten der Eingangsinstanz, der die höchste Wahrscheinlichkeit besitzt;
  - die Einfügung (3109) des identifizierten obligatorischen Knotens in eine geordnete Liste von obligatorischen Knoten;
  - das Ersetzen (3110) des Abfahrtsknotens der Eingangsinstanz durch den identifizierten obligatorischen Knoten und Entfernen des identifizierten obligatorischen Knotens aus der Einheit von obligatorischen Knoten der Eingangsinstanz;
  - wobei die Iterationen enden, wenn eine Anzahl von Knoten in der Einheit von obligatorischen Knoten der Eingangsinstanz gleich eins ist, wobei der in der Einheit von obligatorischen Knoten der Eingangsinstanz verbleibende obligatorische Knoten in die geordnete Liste eingefügt wird und die geordnete Liste die Ausgangsinformation bildet.

3. Verfahren nach Anspruch 1 oder 2, **dadurch gekennzeichnet, dass** die Prozedur lokaler Optimierung der Reihenfolge der obligatorischen Knoten eine iterative Prozedur ist, die eine Instanz, Anfangsinstanz genannt, und eine für eine Reihenfolge von obligatorischen Knoten, Anfangsreihenfolge genannt, repräsentative Information am Eingang nimmt und eine für eine optimierte Reihenfolge von obligatorischen Knoten, optimierte Reihenfolge genannt, repräsentative Information am Ausgang generiert,

  - wobei jede für eine Reihenfolge von obligatorischen Knoten repräsentative Information eine Liste von geordneten obligatorischen Knoten ist und bei jeder Iteration enthält:
  - die Bestimmung (3202) eines Paars von obligatorischen Knoten, Drehpunktknoten genannt, unter den obligatorischen Knoten der geordneten Liste von obligatorischen Knoten der Anfangsreihenfolge, Anfangsliste genannt, und den Erhalt einer geänderten geordneten Liste von obligatorischen Knoten, geänderte Liste genannt, in der die obligatorischen Knoten der Anfangsliste, die sich zwischen den zwei Drehpunktknoten befinden, symmetrisch vertauscht wurden, wobei das bestimmte Paar von Drehpunktknoten sich von allen Paaren von Drehpunktknoten unterscheidet, die bereits verwendet wurden, um die Reihenfolge der obligatorischen Knoten in der Anfangsliste zu ändern;
  - die Definition (3204) einer für die Reihenfolge der obligatorischen Knoten in der geänderten Liste repräsentativen Information als eine temporäre optimierte Reihenfolge, wenn globale Übergangskosten (3203) eines Wegs zwischen den Abfahrts- und Ankunftsknoten der Anfangsinstanz gemäß der Reihenfolge der obligatorischen Knoten in der geänderten Liste niedriger sind als globale Übergangskosten des Wegs gemäß der Reihenfolge der obligatorischen Knoten in der Anfangsliste; und die Definition (3206) der temporären optimierten Reihenfolge als Anfangsreihenfolge; und
  - das Beenden (3207) der Iterationen der lokalen Optimierungsprozedur, wenn eine Stoppbedingung erfüllt ist (3205), wobei die optimierte Reihenfolge die letzte temporäre optimierte Reihenfolge ist, die durch die lokale Optimierungsprozedur erhalten wird.

4. Verfahren nach Anspruch 1, 2 oder 3, **dadurch gekennzeichnet, dass** das RNCG während einer vorhergehenden Anpassungsphase an den Graphen angepasst wurde, wobei die vorhergehende Anpassungsphase eine Lernprozedur enthält, die es ermöglicht, Parameter einer Faltungsphase und einer linearen Kombinationsphase des RNCG, Parameter des RNCG genannt, anzupassen, wobei die Lernprozedur eine iterative Prozedur ist, die bei jeder Iteration enthält:

  - das Generieren (502) einer Zufallsinstanz des Graphen;
  - die Anwendung (503) der das RNCG verwendenden Prozedur an die Zufallsinstanz, um eine erste Information zu erhalten, die für eine Reihenfolge der obligatorischen Knoten der Zufallsinstanz repräsentativ ist, erste Information genannt;

- das Generieren (504) einer zweiten Information, die für eine Reihenfolge der obligatorischen Knoten der zufällig definierten Zufallsinstanz repräsentativ ist, zweite Information genannt;

- den Erhalt einer ersten und einer zweiten Information, die für eine Reihenfolge der optimierten obligatorischen Knoten repräsentativ sind, erste und zweite optimierte Informationen genannt, durch Anwenden der lokalen Optimierungsprozedur an die Reihenfolge der obligatorischen Knoten entsprechend der ersten bzw. der zweiten Information;

- die Auswahl (507, 508, 509) der von der ersten oder der zweiten optimierten Information dargestellten Reihenfolge, die es ermöglicht, globale Übergangskosten eines Wegs zwischen den Abfahrts- und Ankunftsknoten der Zufallsinstanz zu minimieren;

- das Bilden einer neuen Instanz ausgehend von jedem obligatorischen Knoten der Zufallsinstanz, wobei jede neue Instanz als Abfahrtsknoten den obligatorischen Knoten, der der neuen Instanz entspricht, als Ankunftsknoten den Ankunftsknoten der Zufallsinstanz und als Einheit von obligatorischen Knoten die auf den obligatorischen Knoten, der als Abfahrtsknoten der neuen Instanz in der ausgewählten Reihenfolge verwendet wird, folgenden Knoten hat; und für die Zufallsinstanz und jede neue Instanz das Bilden eines Paars durch Zuordnen der Instanz zu einem nächsten für die Instanz zu durchquerenden obligatorischen Knoten, wobei der nächste zu durchquerende obligatorische Knoten der obligatorische Knoten ist, der auf den Abfahrtsknoten der Instanz in der ausgewählten Reihenfolge folgt;

- die Aktualisierung eines Lernfensters mit den so gebildeten Paaren;

- die Weiterentwicklung der Parameter des RNCG, um einen Vorhersagefehler durch das RNCG eines nächsten zu durchquerenden obligatorischen Knotens zu minimieren, indem der nächste obligatorische Knoten von Paaren des Lernfensters als Bezug nächster zu durchquerender obligatorischer Knoten verwendet wird, die vom RNCG zu erhalten sind.

5. Vorrichtung zur Definition eines von einem Fahrzeug in einer von einem Graphen von durch Kanten verbundenen Knoten dargestellten Umgebung zu verfolgenden Wegs, wobei jeder Knoten des Graphen eine Position darstellt, die vom Fahrzeug eingenommen werden kann, wobei jede Kante zwischen zwei Knoten Übergangskosten zwischen den zwei Knoten zugeordnet ist, wobei die Vorrichtung enthält:

- Erhaltseinrichtungen, um eine Instanz des Graphen zu erhalten (30), zu lösende Instanz genannt, wobei jede Instanz von einem Abfahrtsknoten, einem Ankunftsknoten und einer Einheit von obligatorischen Knoten dargestellt wird, die das Fahrzeug durchfahren muss, wobei die Abfahrt-, Ankunfts- und obligatorischen Knoten die Knoten der zu lösenden Instanz bilden;

- Erhaltseinrichtungen, um eine für eine Anfangsdurchfahrreihenfolge der obligatorischen Knoten repräsentative Information zu erhalten (31), indem eine Prozedur angewendet wird, die ein gefaltetes neuronales Graphennetzwerk, RNCG genannt, verwendet, das an den Graphen bei der zu lösenden Instanz angepasst ist;

- Ausführungseinrichtungen zur Ausführung (32) einer lokalen Optimierungsprozedur der Reihenfolge der obligatorischen Knoten, um eine optimierte Reihenfolge der obligatorischen Knoten zu erhalten, wobei die Prozedur mit der für die Anfangsreihenfolge repräsentativen Information initialisiert wird;

- Definitionseinrichtungen, um einen Weg für die zu lösende Instanz ausgehend von der optimierten Reihenfolge der obligatorischen Knoten und für jedes Paar von Knoten der zu lösenden Instanz von einem kürzeren Weg zwischen den Knoten des Paars zu definieren (33).

6. Vorrichtung nach Anspruch 5, wobei die lokale Optimierungsprozedur der Reihenfolge der obligatorischen Knoten eine iterative Prozedur ist, die eine Instanz, Anfangsinstanz genannt, und eine für eine Reihenfolge von obligatorischen Knoten, Anfangsreihenfolge genannt, repräsentative Information am Eingang nimmt und eine für eine optimierte Reihenfolge von obligatorischen Knoten, optimierte Reihenfolge genannt, repräsentative Information am Ausgang generiert,

- wobei jede für eine Reihenfolge von obligatorischen Knoten repräsentative Information eine Liste von geordneten obligatorischen Knoten ist, und bei jeder Iteration enthält:

- die Bestimmung eines Paars von obligatorischen Knoten, Drehpunktknoten genannt, unter den obligatorischen Knoten der geordneten Liste von obligatorischen Knoten der Anfangsreihenfolge, Anfangsliste genannt, und den Erhalt einer geänderten geordneten Liste von obligatorischen Knoten, geänderte Liste genannt, in der die obligatorischen Knoten der Anfangsliste, die sich zwischen den zwei Drehpunktknoten befinden, symmetrisch vertauscht wurden, wobei das bestimmte Paar von Drehpunktknoten sich von allen Paaren von Drehpunktknoten unterscheidet, die bereits verwendet wurden, um die Reihenfolge der obligatorischen Knoten in der Anfangsliste zu ändern;

- die Definition einer für die Reihenfolge der obligatorischen Knoten in der geänderten Liste repräsentativen Information als eine temporäre optimierte Reihenfolge, wenn globale Übergangskosten eines Wegs zwischen den Abfahrts- und Ankunftsknoten der Anfangsinstanz gemäß der Reihenfolge der obligatorischen Knoten in der geänderten Liste niedriger sind als globale Übergangskosten des Wegs gemäß der Reihenfolge der obligatorischen Knoten in der Anfangsliste, und die Definition der temporären optimierten Reihenfolge als Anfangsreihenfolge; und

- das Beenden der Iterationen der lokalen Optimierungsprozedur, wenn eine Stoppbedingung erfüllt ist, wobei die optimierte Reihenfolge die letzte temporäre optimierte Reihenfolge ist, die durch die lokale Optimierungsprozedur erhalten wird.

7. Fahrzeug, das eine Vorrichtung nach Anspruch 5 enthält.

8. Computerprogramm, **dadurch gekennzeichnet, dass** es Anweisungen zur Durchführung des Verfahrens nach einem der Ansprüche 1 bis 4 durch eine Vorrichtung nach einem der Ansprüche 5 und 6 enthält, wenn das Programm von einem Prozessor der Vorrichtung ausgeführt wird.

9. Speichereinrichtungen, **dadurch gekennzeichnet, dass** sie ein Computerprogramm speichern, das Anweisungen zur Ausführung des Verfahrens nach einem der Ansprüche 1 bis 4 durch eine Vorrichtung nach einem der Ansprüche 5 und 6 enthält, wenn das Programm von einem Prozessor der Vorrichtung ausgeführt wird.

**Claims**

1. Method for defining a path to be followed by a vehicle in an environment represented by a graph of nodes connected by edges, each node of said graph representing a position that can be adopted by said vehicle, each edge between two nodes being associated with a transition cost between the two nodes, the method comprising:

- obtaining (30) an instance of said graph, referred to as an instance to be resolved, each instance being represented by a start node, a destination node and a set of mandatory nodes through which the vehicle must pass, said start, destination and mandatory nodes forming the nodes of the instance to be resolved;
- obtaining (31) information representing an initial order of travel over said mandatory nodes by applying a procedure, using a graph convolutional neural network, referred to as a GCNN, adapted to said graph, to said instance to be resolved;
- executing (32) a procedure of local optimisation of the order of the mandatory nodes in order to obtain an optimised order of the mandatory nodes, said procedure being initialised with said information representing the initial order;
- defining (33) a path for said instance to be resolved from the optimised order of the mandatory nodes and, for each pair of nodes of said instance to be resolved, from a shortest path between the nodes of said pair.

2. Method according to claim 1, **characterised in that** the procedure using the GCNN is an iterative procedure taking an instance of the graph as an input, referred to as the input instance, and generating information representing an initial order of travel over the mandatory nodes of the input instance as an output, referred to as output information, and comprising, at each iteration:

- applying (3107) the GCNN to said input instance in order to obtain, for each node of the graph, a value representing a probability of being the next mandatory node to be passed through following the start node of the input instance;
- identifying (3108) the mandatory node in the set of mandatory nodes of the input instance having the highest probability;
- inserting (3109) the mandatory node identified in an ordered list of mandatory nodes;
- replacing (3110) the start node of the input instance with the mandatory node identified and removing the mandatory node identified from the set of mandatory nodes of the input instance;
- the iterations ending when a number of nodes in the set of mandatory nodes of the input instance is equal to one, the mandatory node remaining in the set of mandatory nodes of the input instance being inserted in said ordered list and said ordered list forming the output information.

3. Method according to claim 1 or 2, **characterised in that** the procedure for local optimisation of the order of mandatory nodes is an iterative procedure taking an instance, referred to as the initial instance, and information representing an order of mandatory nodes, referred to as the initial order, as an input and generating information representing an optimised order of mandatory nodes as an output, referred to as the optimised order,

- each item of information representing an order of mandatory nodes being a list of ordered mandatory nodes, and comprises at each iteration:
- determining (3202) a pair of mandatory nodes, referred to as pivot nodes, among the mandatory nodes of the ordered list of mandatory nodes of the initial order, referred to as the initial list, and obtaining a modified ordered list of mandatory nodes, referred to as the modified list, wherein the mandatory nodes of the initial list located between the two pivot nodes have been inverted symmetrically, the pair of pivot nodes determined being different from all pairs of pivot nodes already used for modifying the order of the mandatory nodes in the initial list;
- defining (3204) information representing the order of the mandatory nodes in the modified list as being a temporary optimised order when a total transition cost (3203) of a path between the start and destination nodes of the initial instance following the order of the mandatory nodes in the modified list is lower than a total transition cost of said path following the order of the mandatory nodes in the initial list; and defining (3206) the temporary optimised order as being the initial order; and
- ending (3207) the iterations of the local optimisation procedure when a stop condition is fulfilled (3205), the optimised order being the last temporary optimised order obtained by the local optimisation procedure.

4.  Method according to claim 1, 2 or 3, **characterised in that** the GCNN was adapted to said graph during a prior adaptation phase, the prior adaptation phase comprising a learning procedure for adapting parameters of a convolution phase and of a linear combination phase of said GCNN, referred to as GCNN parameters, the learning procedure being an iterative procedure comprising at each iteration:

- generating (502) a random instance of the graph;
- applying (503) the procedure using the GCNN to the random instance in order to obtain a first item of information representing an order of the mandatory nodes of the random instance, referred to as a first item of information;
- generating (504) a second item of information representing an order of the mandatory nodes of the random instance defined randomly, referred to as a second item of information;
- obtaining a first and a second item of information representing an order of the optimised mandatory nodes, referred to as first and second optimised items of information, applying the local optimisation procedure respectively to the order of the mandatory nodes corresponding to the first and second items of information;
- selecting (507, 508, 509) the order represented by said first or by said second optimised item of information making it possible to minimise a total transition cost of a path between the start and destination nodes of the random instance;
- forming a new instance from each mandatory node of the random instance, each new instance having as its start node the mandatory node corresponding to the new instance, as its destination node the destination node of the random instance and as a set of mandatory nodes the nodes following the mandatory node used as the start node of the new instance in the selected order; and, for the random instance and each new instance, forming a pair by associating said instance with a next mandatory node to be passed through for said instance, said next mandatory node to be passed through being the mandatory node following the start node of said instance in the selected order;
- updating a learning window with the pairs thus formed;
- changing the parameters of the GCNN to minimise an error in prediction by the GCNN of a next mandatory node to be passed through using the next mandatory node of pairs of the learning window as a reference of next mandatory nodes to be passed through to be obtained by the GCNN.

5.  Device for defining a path to be followed by a vehicle in an environment represented by a graph of nodes connected by edges, each node of said graph representing a position that can be adopted by said vehicle, each edge between two nodes being associated with a transition cost between the two nodes, the device comprising:

- obtaining means for obtaining (30) an instance of said graph, referred to as the instance to be resolved, each instance being represented by a start node, a destination node and a set of mandatory nodes through which the vehicle must pass, said start, destination and mandatory nodes forming the nodes of the instance to be resolved;
- obtaining means for obtaining (31) information representing an initial order of travelling through said mandatory nodes by applying a procedure, using a graph convolutional neural network, referred to as a GCNN, adapted to said graph, to said instance to be resolved;
- execution means for executing (32) a procedure for local optimisation of the order of the mandatory nodes in order to obtain an optimised order of the mandatory nodes, said procedure being initialised with said information representing the initial order;
- definition means for defining (33) a path for said instance to be resolved from the optimised order of the mandatory nodes and, for each pair of nodes of the instance to be resolved, from a shorter path between the nodes of said pair.

6. Device according to claim 5, wherein said procedure for local optimisation of the order of the mandatory nodes is an iterative procedure taking an instance, referred to as an initial instance, and information representing an order of mandatory nodes, referred to as an initial order, as an input and generating information representing an optimised order of mandatory nodes as an output, referred to as an optimised order,

- each item of information representing an order of mandatory nodes being a list of ordered mandatory nodes, and comprises at each iteration:
- determining a pair of mandatory nodes, referred to as pivot nodes, among the mandatory nodes of the ordered list of mandatory nodes of the initial order, referred to as an initial list, and obtaining a modified ordered list of mandatory nodes, referred to as a modified list, wherein the mandatory nodes of the initial list located between the two pivot nodes have been inverted symmetrically, the pair of pivot nodes determined being different from all pairs of pivot nodes already used for modifying the order of the mandatory nodes in the initial list;
- defining information representing the order of the mandatory nodes in the modified list as being a temporary optimised order when a total transition cost of a path between the start and destination nodes of the initial instance following the order of the mandatory nodes in the modified list is less than a total transition cost of said path following the order of the mandatory nodes in the initial list; and defining the temporary optimised order as being the initial order; and
- ending the iterations of the local optimisation procedure when a stop condition is fulfilled, the optimised order being the last temporary optimised order obtained by the local optimisation procedure.

7. Vehicle comprising a device according to claim 5.

8. Computer program, **characterised in that** it comprises instructions for implementing, by a device according to either one of claims 5 and 6, the method according to any one of claims 1 to 4, when said program is executed by a processor of said device.

9. Storage means, **characterised in that** they store a computer program comprising instructions for executing, by a device according to either one of claims 5 and 6, the method according to any one of claims 1 to 4, when said program is executed by a processor of said device.

[Fig. 1]

[Fig. 2]

[Fig. 3]

```
┌─────────────────────┐
│  Obtention d'une    │
│     instance        │── 30
└─────────────────────┘
          │
          ▼
┌─────────────────────┐
│ Initialisation ordre│
│ basé RNCG adapté au │── 31
│     graphe G        │
└─────────────────────┘
          │
          ▼
┌─────────────────────┐
│ Optimisation ordre  │── 32
└─────────────────────┘
          │
          ▼
┌─────────────────────┐
│  Définir un chemin  │── 33
└─────────────────────┘
```

[Fig. 4]

[Fig. 5]

[Fig. 6]

[Fig. 7]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **THOMAS N KIPF ; MAX WELLING.** Semi-supervised classification with graph convolutional networks. *ICLR,* 2017

- **DIJKSTRA, E. W.** A note on two problems in connexion with graphs. *Numerische Mathematik,* 1959, vol. 1, 269-271